(19) Europäisches Patentamt
European Patent Office
Office européen des brevets

(11) **EP 4 342 867 A1**

(12) **EUROPEAN PATENT APPLICATION**

(43) Date of publication:
**27.03.2024 Bulletin 2024/13**

(21) Application number: **22382878.1**

(22) Date of filing: **26.09.2022**

(51) International Patent Classification (IPC):
***C04B 28/04*** *(2006.01)* ***C04B 28/08*** *(2006.01)*
***C04B 40/00*** *(2006.01)* ***C04B 22/04*** *(2006.01)*
***C04B 22/06*** *(2006.01)*

(52) Cooperative Patent Classification (CPC):
(C-Sets available)
**C04B 28/04; C04B 28/08; C04B 40/0039;**
C04B 2111/34; C04B 2111/70; C04B 2201/20

(Cont.)

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(71) Applicant: **Sika Technology AG**
**6340 Baar (CH)**

(72) Inventor: **CALAMA, Juan Antonio**
**27007 SALAMANCA (ES)**

(74) Representative: **Sika Patent Attorneys**
**c/o Sika Technology AG**
**Corp. IP Dept.**
**Tüffenwies 16**
**Postfach**
**8048 Zürich (CH)**

(54) **METHODS FOR THE CONTROL OF SHRINKAGE OF CEMENTITIOUS COMPOSITIONS AND CEMENTITIOUS GROUTS HAVING CONTROLLED SHRINKAGE**

(57) A method for the control of the shrinkage of cementitious materials, said method comprising the steps of (i) providing a cementitious material, (ii) adding aluminium powder to said cementitious material, (iii) adding calcium oxide or magnesium oxide to said cementitious material, and (iv) adding a shrinkage reducing agent which is an organic molecule to said cementitious material. Cementitious grouts comprising aluminium powder, calcium oxide or magnesium oxide, and a shrinkage reducing agent which is an organic molecule

EP 4 342 867 A1

(52) Cooperative Patent Classification (CPC): (Cont.)

C-Sets
**C04B 28/04, C04B 14/062, C04B 18/141,
C04B 18/146, C04B 20/008, C04B 22/04,
C04B 22/064, C04B 38/02, C04B 40/0028,
C04B 2103/58;
C04B 28/04, C04B 14/062, C04B 18/141,
C04B 18/146, C04B 20/008, C04B 22/04,
C04B 22/066, C04B 24/32, C04B 38/02,
C04B 40/0028;
C04B 28/08, C04B 7/02, C04B 14/062,
C04B 18/146, C04B 22/008, C04B 22/04,
C04B 24/02, C04B 38/02, C04B 40/0028;
C04B 40/0039, C04B 22/04, C04B 22/064,
C04B 24/32**

## Description

### Technical field

The present invention relates to methods for the control of shrinkage of cementitious compositions using a combination of aluminium powder, calcium oxide or magnesium oxide, and a shrinkage reducing agent which is an organic molecule. The present invention also relates to cementitious grouts comprising such combination of aluminium powder, calcium oxide or magnesium oxide, and a shrinkage reducing agent which is an organic molecule.

### Background of the invention

It is well known that cementitious materials, for example concrete or grouts, shrink during hardening. Known shrinkage mechanisms can be classified as plastic shrinkage, drying shrinkage, autogenous shrinkage, and carbonation shrinkage. Shrinkage frequently is a problem, because it induces internal stress in the hardened cementitious material and, if the stress is higher than the tensile strength of the material, leads to cracking. Also, shrinkage is especially problematic in case of cementitious materials for grouting because grouting materials are commonly intended to completely fill a pre-defined volume.

It is known in the art to use admixtures for cementitious materials that can reduce or compensate the shrinkage. For example, gas-evolving admixtures can be used to compensate shrinkage of cementitious materials. The most frequently used gas-evolving admixture being aluminium powder. However, it has been described in literature, that especially in cases where Portland cement is replaced in cementitious materials by ground granulated blast furnace slag (GGBFS), the effect of aluminium powder can lead to excessive expansion and much reduced strength (J. Kuziak et al "Influence of the Type of Cement on the Action of the Admixture Containing Aluminium Powder" in Materials, 2021, 14, 2927).

The replacement of Portland cement by pozzolanic and/or latent hydraulic materials, such as GGBFS, is however desirable to reduce the $CO_2$ footprint of cementitious materials and especially of cementitious grouts.

It is known from WO 2016/185264 (Holcim Technology) that a combination of lowreactivity calcium oxide or magnesium oxide and organic shrinkage reducing agent can be used to control shrinkage in a concrete composition based on a binder having 75 w% Portland cement and 25 w% GGBFS.

There is, however, still a need for further and improved admixtures to reduce the shrinkage of cementitious materials, especially where there is a high replacement level of Portland cement by pozzolanic and/or latent hydraulic materials, especially by GGBFS.

### Summary of the invention

It is an objective of the present invention to provide methods for the reduction of shrinkage of cementitious materials, especially of cementitious grouts. Very preferably, the present invention provides methods for the reduction shrinkage of cementitious materials where cement, especially Portland cement, is replaced by slag, especially GGBFS. It is also an objective of the present invention to provide cementitious materials for grouting which have reduced shrinkage. Especially, such cementitious grouts have high replacement levels of cement by slag. Cementitious materials, especially grouts, of the present invention are useful in many applications, for example in the construction of wind towers.

The objective of the present invention is solved by a method as claimed in claim 1. It is thus at the core of the present invention to add aluminium powder and calcium oxide or magnesium oxide to a cementitious composition to reduce the shrinkage of said cementitious composition. The present invention makes use of the finding that aluminium powder and calcium oxide or magnesium oxide act synergistically in reducing the shrinkage of cementitious materials, especially where cement is replaced by slag.

Further aspects of the present invention are the subject of independent claims. Preferred embodiments of the present invention are the subject of dependent claims.

### Detailed ways

In a first aspect the present invention relates to a method for the control of the shrinkage of cementitious materials, said method comprising the steps of

(i) providing a cementitious material,
(ii) adding aluminium powder to said cementitious material,
(iii) adding calcium oxide or magnesium oxide to said cementitious material,
(iv) adding a shrinkage reducing agent which is an organic molecule to said cementitious material,

wherein the cementitious material has a density of not less than 800 $kg/m^3$, preferably not less than 1800 $kg/m^3$ after hardening.

Cementitious materials within the present context are materials comprising at least one cementitious binder and optionally additionally aggregates, fillers, admixtures, additives, and/or water. Further materials may additionally be present, such as, for example, reinforcing fibers. Cementitious materials of the present invention set and harden when mixed with water.

A cementitious binder within the present context is a binder which reacts with water to form solid hydrates. A cementitious binder thus is curable with water and sets and hardens even under water. Examples for cementitious binders are cements, especially Portland cements according to standard EN 197-1, aluminate cement according to standard EN 14647, calcium sulfoaluminate cements. Cementitious binders of the present invention may additionally comprise pozzolanic and/or latent hydraulic materials. It is especially preferred within the present context for the cementitious binder to comprise or consist of cement and slag, especially Portland cement and ground granulated blast furnace slag (GGBFS). Further pozzolanic and/or latent hydraulic materials that may be present in the cementitious binder are fly ash, silica fume, micronized silica, trass, marl, and clay, especially calcined clay.

According to embodiments, a method of the present invention is characterized in that the cementitious material comprises a cementitious binder, said cementitious binder comprising cement and slag, especially Portland cement and ground granulated blast furnace slag.

According to some embodiments, in a method of the present invention, the cementitious binder comprises or consists of Portland cement and slag, especially GGBFS, and the weight ratio of slag relative to the total dry weight of cementitious binder is at least 10 w%, preferably at least 20 w%, more preferably at least 40 w%, especially at least 66 w%.

The term "control of shrinkage" within the present context relates to a reduction of shrinkage and/or expansion of a cementitious composition as compared to a noninventive composition without addition of aluminium powder and calcium oxide or magnesium oxide. Thus the terms "control" and "reduction" are used interchangeably herein. Shrinkage and/or expansion starts with the addition of water to a cementitious composition and continues during setting and hardening. Thus, within the present context, shrinkage includes plastic shrinkage as well as autogenous shrinkage and chemical shrinkage. However, shrinkage of fully hardened cementitious materials, for example due to carbonation, is not encompassed. Shrinkage and/or expansion can be measured according to standards EN 12617-4 (dimensional stability), ASTM C827 (fresh mortar expansion), and ASTM C1698 (autogenous shrinkage).

According to embodiments, in a method of the present invention aluminium powder, calcium oxide or magnesium oxide, and shrinkage reducing agent which is an organic molecule are added to a dry cementitious material. A dry cementitious material is a cementitious material as described above with a content of water of not more than 5 w%, preferably not more than 1 w%, relative to the total weight of the cementitious material. Such addition is especially possible during the production of dry mortars or dry grouts.

A method of the present invention may additionally comprise a step of adding water, especially mixing water to the cementitious composition. Water preferably is added in an amount sufficient to realize a desired workability of the resulting mix, Typically, water is added in an amount to realize a weight ratio of dry cementitious composition to water of between 0.2 and 1.0.

According to embodiments, in a method of the present invention, aluminium powder, calcium oxide or magnesium oxide, and/or shrinkage reducing agent which is an organic molecule are added together with any mixing water.

The term "density" within the present context relates to the bulk density. Density within the present context is measured according to standard EN 1015-6.

Aluminium powder and calcium oxide or magnesium oxide within the present context are particulate materials. Particulate materials can be characterized by their particle size.

The particle size, its distribution or the average particle size of aluminium powder and of calcium oxide or magnesium oxide can be measured by laser diffraction, preferably according to standard ISO 13320:2009. In particular, an instrument Mastersizer 2000 with a dispersing unit Hydro 2000G and the software Mastersizer 2000 of the company Malvern Instruments GmbH (Germany) are used. Isopropanol, for example, is suitable as a measuring medium. Within the present context, the average particle size corresponds in particular to the D50 value (50% of the particles are smaller than the specified value, 50% are correspondingly larger).

According to embodiments, in a method of the present invention, the aluminium powder has a particle size D50 in the range of 0.1 - 45 $\mu$m, preferably 0.2 - 20 $\mu$m, more preferably 0.5 - 15 $\mu$m, still more preferably 1 - 10 $\mu$m, especially 2 - 8 $\mu$m.

According to embodiments, in a method of the present invention, the calcium oxide or magnesium oxide has a particle size D50 in the range of 10 - 50 $\mu$m.

Throughout the present invention calcium oxide and magnesium oxide can be used as alternatives.

A shrinkage reducing agent which is an organic molecule is added in a method of the present invention. According to embodiments, shrinkage reducing agents which are organic molecules are selected from glycols, preferably polypropylene glycols, polyethylene glycols, or mixed polypropylene-polyethylene glycols, alkyl ethers of polyalkylene

glycols, especially neopentyl glycols, polyols, especially glycerin or erythritol, alkoxylated polyols, especially alkoxylated glycerin or alkoxylated erythritol, alkylated ethanolamine, carboxylic acid esters of polyalkylene glycols, especially fatty acid ester of polyalkylene glycols. A very preferable organic shrinkage reducing agent has the chemical structure (I)

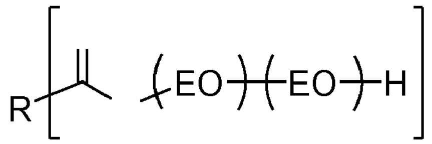

(I)

where

R independently from one another is a linear or branched, saturated or unsaturated aliphatic, cycloaliphatic or aromatic hydrocarbon moiety with 3 to 38 carbon atoms,
EO is ethylene oxide, PO is propylene oxide,
a = 1 to 4,
n = 0 - 40,

$$m = 0 - 40,$$

wherein the sum n + m = 4 - 80,
and wherein EO and PO can be distributed randomly, block-wise or with a gradient.

According to embodiments, in a method of the present invention the aluminium powder is added in an amount of 0.0001 - 0.01 w% relative to the weight of cementitious binder present in the cementitious material.
According to embodiments, the calcium oxide or magnesium oxide is added in an amount of 1 - 5 w% relative to the weight of cementitious binder present in the cementitious material.
According to embodiments, the shrinkage reducing agent which is an organic molecule is added in an amount of 0.1 - 2 w% relative to the weight of cementitious binder present in the cementitious material.
In another aspect, the present invention relates to a cementitious grout comprising or consisting of (in each case relative to the total dry weight of the cementitious grout)

a) 10 - 80 w% of a cementitious binder, said cementitious binder comprising cement and slag,
b) 0.0001 - 0.01 w% of aluminium powder,
c) 0.3 - 2 w% of calcium oxide or magnesium oxide,
d) 0.03 - 1 w% of a shrinkage reducing agent which is an organic molecule,
e) 10 - 80 w% relative to the dry weight of the grout of at least one aggregate and/or filler,
f) optionally further additives.

According to embodiments, a cementitious grout of the present invention comprises or consists of

a) 10 - 80 w%, relative to the cementitious grout, of a cementitious binder, said cementitious binder comprising cement and slag,
b) 0.0001 - 0.01 w%, relative to the cementitious binder, of aluminium powder,
c) 1 - 5 w%, relative to the cementitious binder, of calcium oxide or magnesium oxide,
d) 0.1 - 2 w%, relative to the cementitious binder, of a shrinkage reducing agent which is an organic molecule,
e) 10 - 80 w% relative to the dry weight of the grout of at least one aggregate and/or filler,
f) optionally further additives.

All embodiments described above also relate to this aspect.
Further additives are additives commonly known to be useful in cementitious compositions, especially concrete or mortar. Such additives especially are selected from accelerators, retarders, pigments, fibers, biocides, defoamers, air-entrainers, redispersible polymer powders, and viscosity modifiers, especially thickeners, plasticizers, and/or superplasticizers. Additives are different in chemistry and/or structure from the shrinkage reducing agent which are organic molecules as defined above.
Aggregates and/or fillers are inert materials known from concrete or mortar industries. Aggregates especially

are sand, gravel, recycled plastics, lightweight aggregate such as glass beads, and/or bio-sourced aggregates. Fillers especially are fine limestone powders.

According to embodiments, the cementitious binder in a cementitious grout of the present invention comprises or consists of 5 - 95 w% of Portland cement and 5 - 95 w% of slag, especially ground granulated blast furnace slag, in each case relative to the dry weight of the cementitious binder.

In some cases, it is preferable that the cementitious binder in a cementitious grout of the present invention of the present invention additionally comprises micro silica, silica fume, and/or calcium hydroxide.

Thus, a preferred cementitious binder may comprise or consist of

i) 5 - 50 w% of Portland cement,
ii) 5 - 50 w% of slag, especially ground granulated blast furnace slag,
iii) 1 - 5 w% of silica fume,
iv) 0.5 - 3 w% of micro silica, and
v) 0.1 - 1 w% of calcium hydroxide.

A very preferred cementitious grout of the present invention comprises or consists of

a) 10 - 80 w%, relative to the cementitious grout, of a cementitious binder, said cementitious binder consisting of

   i) 5 - 50 w% of Portland cement,
   ii) 5 - 50 w% of slag, especially ground granulated blast furnace slag,
   iii) 1 - 5 w% of silica fume,
   iv) 0.5 - 3 w% of micro silica, and
   v) 0.1 - 1 w% of calcium hydroxide,

b) 0.0001 - 0.01 w%, relative to the cementitious binder, of aluminium powder,
c) 1 - 5 w%, relative to the cementitious binder, of calcium oxide or magnesium oxide,
d) 0.1 - 2 w%, relative to the cementitious binder, of a shrinkage reducing agent which is an organic molecule,
e) 10 - 80 w% relative to the dry weight of the grout of at least one aggregate and/or filler,
f) optionally further additives.

Inventive grouts have a reduced or controlled shrinkage and/or expansion. Such grout materials can be used in applications where non-shrink grouts are required.

In another aspect the present invention relates to an admixture for cementitious compositions said admixture comprising aluminium powder, calcium oxide or magnesium oxide, and a shrinkage reducing agent which is an organic molecule.

All embodiments described above also relate to this aspect.

## Examples

Grout materials were prepared by thoroughly mixing the raw materials as indicated in below table 1 for 3 minutes on a laboratory mixer. Mixes were visually homogeneous. Examples 1 and 2 are comparative examples not according to the present invention. Examples 3 and 4 are inventive examples.

*Table 1 - compositions of examples (all numbers relate to w%)*

| **Example** | **1** | **2** | **3** | **4** |
|---|---|---|---|---|
| CEM I 52.5 R | 24 | 24 | 24 | 24 |
| Slag*1 | 10.5695 | 10.5695 | 10.5695 | 10.5695 |
| Silica fume*2 | 3 | 3 | 3 | 3 |
| Micro silica*3 | 1.9 | 1.9 | 1.9 | 1.9 |
| $Ca(OH)_2$ | 0.13 | 0.13 | 0.13 | 0.13 |
| Sand*4 | 59 | 58.7 | 58.7 | 58.7 |
| Aluminium powder*5 | 0.0005 | 0 | 0.0005 | 0.0005 |

(continued)

| Example | 1 | 2 | 3 | 4 |
|---|---|---|---|---|
| CaO*6 | 1 | 1 | 1 | 0 |
| MgO*7 | 0 | 0 | 0 | 1 |
| Organic SRA*8 | 0 | 0.3 | 0.3 | 0.3 |
| Additives*9 | 0.4 | 0.4 | 0.4 | 0.4 |
| *1 ground granulated blast furnace slag (Blaine fineness 4'500 $cm^2/g$)<br>*2 BET surface 18 - 22 $m^2/g$<br>*3 particle size D50 100 μm<br>*4 particle sizes 0.1 - 0.7 mm, 0.6 - 1 mm, 1 - 2 mm, 2 - 3 mm<br>*5 particle size D50 8 μm<br>*6 Lime CL-90 Q (< 7% sieve residue at 90 μm)<br>*7 particle size D50 15 μm<br>*8 fatty acid ester of a mixed polyethylene/polypropylene glycol<br>*9 mixture of defoamer, superplasticizer, thickener | | | | |

For the preparation of liquid grouts, the respective powders of examples 1 - 4 were slowly added to the mixing water within 3 minutes in a 3-L Hobart mixer. Water was used in an amount to give a water to powder weight ratio of 0.2. Mixing was then continued for 2 minutes at high speed. The liquid grout compositions were then immediately used for the following testing.

Dimensional stability was tested according to standard EN 12617-4. Fresh mortar expansion was measured according to standard ASTM C827. Autogenous shrinkage was measured according to standard ASTM C1698. All measurements were done after the time indicated in the below table 2

The following table 2 gives an overview of the results.

*Table 2 - results measured*

| Example | 1 | 2 | 3 | 4 |
|---|---|---|---|---|
| Dimensional stability (24h) [mm/m] | +1.15 | +0.9 | n.m. | +0.007 |
| Dimensional stability (7d) [mm/m] | -0.006 | -0.018 | n.m. | -0.006 |
| Fresh mortar expansion (1h) [%] | +0.4 | -0.4 | 0 | n.m. |
| Fresh mortar expansion (24h) [%] | +0.6 | -0.53 | +0.6 | n.m. |
| Autogenous shrinkage (1d) [strain] | -0.29 | -0.144 | -0.130 | n.m. |
| Autogenous shrinkage (4d) [strain] | -0.42 | -0.214 | -0.191 | n.m. |
| n.m.: not measured<br>positive values indicate expansion, negative values indicate shrinkage | | | | |

It can be seen from the above examples that inventive compositions show improved dimensional stability (cf examples 1 and 2 with example 4). It can also be seen that inventive compositions show good expansion in the fresh state and less autogenous shrinkage (cf examples 1 and 2 with example 3).

## Claims

1. A method for the control of the shrinkage of cementitious materials, said method comprising the steps of

   (i) providing a cementitious material,
   (ii) adding aluminium powder to said cementitious material,
   (iii) adding calcium oxide or magnesium oxide to said cementitious material,
   (iv) adding a shrinkage reducing agent which is an organic molecule to said cementitious material,

wherein the cementitious material has a density of not less than 800 kg/$m^3$, preferably not less than 1800 kg/$m^3$ after hardening.

2. A method as claimed in claim 1, **characterized in that** aluminium powder, calcium oxide or magnesium oxide, and shrinkage reducing agent which is an organic molecule are added to a dry cementitious material.

3. A method as claimed in claim 1, **characterized in that** aluminium powder, calcium oxide or magnesium oxide, and/or shrinkage reducing agent which is an organic molecule are added together with any mixing water

4. A method as claimed in any of the preceding claims, **characterized in that** the cementitious material comprises a cementitious binder, said cementitious binder comprising cement and slag, especially Portland cement and ground granulated blast furnace slag.

5. A method as claimed in claim 4, **characterized in that** the weight ratio of slag relative to the total dry weight of cementitious binder is at least 10 w%, preferably at least 20 w%, mor preferably at least 40 w%, especially at least 66 w%.

6. A method as claimed in any of the preceding claims, **characterized in that** the aluminium powder has a particle size D50 in the range of 0.1 - 45 μm, preferably 0.2 - 20 μm, more preferably 0.5 - 15 μm, still more preferably 1 - 10 μm, especially 2 - 8 μm.

7. A method as claimed in any of the preceding claims, **characterized in that** the calcium oxide or magnesium oxide has a particle size D50 in the range of 10 - 50 μm.

8. A method as claimed in any of the preceding claims, **characterized in that** the aluminium powder is added in an amount of 0.0001 - 0.01 w% relative to the weight of cementitious binder present in the cementitious material.

9. A method as claimed in any of the preceding claims, **characterized in that** the calcium oxide or magnesium oxide is added in an amount of 1 - 5 w% relative to the weight of cementitious binder present in the cementitious material.

10. A method as claimed in any of the preceding claims, **characterized in that** the shrinkage reducing agent which is an organic molecule is added in an amount of 0.1 - 2 w% relative to the weight of cementitious binder present in the cementitious material.

11. A method as claimed in any of the preceding claims, **characterized in that** the shrinkage reducing agent which is an organic molecule is selected from glycols, preferably polypropylene glycols, polyethylene glycols, or mixed polypropylene-polyethylene glycols, alkyl ethers of polyalkylene glycols, especially neopentyl glycols, polyols, especially glycerin or erythritol, alkoxylated polyols, especially alkoxylated glycerin or alkoxylated erythritol, alkylated alkanolamines, carboxylic acid esters of polyalkylene glycols, especially fatty acid ester of polyalkylene glycols

12. Cementitious grout comprising or consisting of (in each case relative to the total dry weight of the cementitious grout)

a) 10 - 80 w% of a cementitious binder, said cementitious binder comprising cement and slag,
b) 0.0001 - 0.01 w% of aluminium powder,
c) 0.3 - 2 w% of calcium oxide or magnesium oxide,
d) 0.03 - 1 w% of a shrinkage reducing agent which is an organic molecule,
e) 10 - 80 w% relative to the dry weight of the grout of at least one aggregate and/or filler,
f) optionally further additives.

13. Cementitious grout according to claim 12, **characterized in that** the cementitious binder comprises or consists of 5 - 95 w% of Portland cement and 5 - 95 w% of slag, especially ground granulated blast furnace slag, in each case relative to the dry weight of the cementitious binder.

14. Cementitious grout according to any of claims 12 or 13, **characterized in that** the cementitious binder comprises or consists of (in each case relative to the dry weight of the cementitious binder)

(ii) 5 - 50 w% of Portland cement,
(iii) 5 - 50 w% of slag, especially ground granulated blast furnace slag,

(iv) 1 - 5 w% of silica fume,
(v) 0.5 - 3 w% of micro silica, and
(vi) 0.1 - 1 w% of calcium hydroxide.

**15.** An admixture for cementitious compositions said admixture comprising aluminium powder, calcium oxide or magnesium oxide, and a shrinkage reducing agent which is an organic molecule

Europäisches Patentamt
European Patent Office
Office européen des brevets

# EUROPEAN SEARCH REPORT

Application Number
EP 22 38 2878

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | YANG LIN ET AL: "Utilization of phosphogypsum for the preparation of non-autoclaved aerated concrete", CONSTRUCTION AND BUILDING MATERIALS, ELSEVIER, NETHERLANDS, vol. 44, 19 April 2013 (2013-04-19), pages 600-606, XP028535957, ISSN: 0950-0618, DOI: 10.1016/J.CONBUILDMAT.2013.03.070 | 1-10,15 | INV. C04B28/04 C04B28/08 C04B40/00 C04B22/04 C04B22/06 |
| Y | * Materials and Methods; | 11-13 | |
| A | figure 12 * | 14 | |
| Y | US 2020/407276 A1 (SAMPSON PAUL [US]) 31 December 2020 (2020-12-31) * paragraphs [0057], [0063], [0065], [0066] * | 11-13 | |
| Y | US 2017/008810 A1 (RADEMAN JERRY E [US] ET AL) 12 January 2017 (2017-01-12) * paragraphs [0019], [0020], [0038]; claims 8,9,12,14 * | 11 | |
| | | | TECHNICAL FIELDS SEARCHED (IPC) |
| Y | WO 2016/189373 A1 (HOLCIM TECHNOLOGY LTD [CH]) 1 December 2016 (2016-12-01) * claims 1,6,7,11; table 1 * | 11 | C04B |
| Y | DATABASE WPI Week 201998 22 November 2019 (2019-11-22) Thomson Scientific, London, GB; AN 2019-A0419E XP002808814, -& CN 110 482 955 A (SINOHYDRO BUREAU 5 CO LTD) 22 November 2019 (2019-11-22) | 12,13 | |
| A | * abstract * * paragraph [0023] * | 14 | |

-/--

The present search report has been drawn up for all claims

1

| Place of search | Date of completion of the search | Examiner |
|---|---|---|
| The Hague | 13 March 2023 | Baldé, Kaisa |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons
& : member of the same patent family, corresponding document

EPO FORM 1503 03.82 (P04C01)

Europäisches Patentamt
European Patent Office
Office européen des brevets

# EUROPEAN SEARCH REPORT

Application Number
EP 22 38 2878

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| Y | MUTHU KUMAR E. ET AL: "Effect of fineness and dosage of aluminium powder on the properties of moist-cured aerated concrete", CONSTRUCTION AND BUILDING MATERIALS, vol. 95, 25 July 2015 (2015-07-25), pages 486-496, XP093030712, Netherlands ISSN: 0950-0618, DOI: 10.1016/j.conbuildmat.2015.07.122 | 12,13 | |
| A | * figure 7; tables 2,3 * | 1-11,15 | |
| | ----- | | |

TECHNICAL FIELDS SEARCHED (IPC)

The present search report has been drawn up for all claims

1

| Place of search | Date of completion of the search | Examiner |
|---|---|---|
| The Hague | 13 March 2023 | Baldé, Kaisa |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons
& : member of the same patent family, corresponding document

EPO FORM 1503 03.82 (P04C01)

# ANNEX TO THE EUROPEAN SEARCH REPORT ON EUROPEAN PATENT APPLICATION NO.

EP 22 38 2878

This annex lists the patent family members relating to the patent documents cited in the above-mentioned European search report. The members are as contained in the European Patent Office EDP file on
The European Patent Office is in no way liable for these particulars which are merely given for the purpose of information.

13-03-2023

| Patent document cited in search report | Publication date | Patent family member(s) | Publication date |
|---|---|---|---|
| US 2020407276 A1 | 31-12-2020 | US 2020407276 A1 | 31-12-2020 |
| | | US 2020407277 A1 | 31-12-2020 |
| | | US 2022002202 A1 | 06-01-2022 |
| | | WO 2021061756 A1 | 01-04-2021 |
| US 2017008810 A1 | 12-01-2017 | NONE | |
| WO 2016189373 A1 | 01-12-2016 | AR 104736 A1 | 09-08-2017 |
| | | AT 517291 A1 | 15-12-2016 |
| | | CA 2987007 A1 | 01-12-2016 |
| | | CO 2017011804 A2 | 20-03-2018 |
| | | EP 3303249 A1 | 11-04-2018 |
| | | US 2018148375 A1 | 31-05-2018 |
| | | WO 2016189373 A1 | 01-12-2016 |
| CN 110482955 A | 22-11-2019 | NONE | |

EPO FORM P0459

For more details about this annex : see Official Journal of the European Patent Office, No. 12/82

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- WO 2016185264 A


### Non-patent literature cited in the description


- **J. KUZIAK et al.** Influence of the Type of Cement on the Action of the Admixture Containing Aluminium Powder. *Materials,* 2021, vol. 14, 2927